# FASCICULE DE BREVET EUROPEEN

(11) **EP 0 978 676 B1**
(45) Date de publication et mention de la délivrance du brevet: **04.12.2002**
(21) Numéro de dépôt: 99401782.0
(22) Date de dépôt: 15.07.1999
(51) Int. Cl.: F16L 13/11, F41F 3/07

(54) **Procédé de calage d'un tube dans un logement tubulaire, notamment d'un tube lance-missile**
Methode zum Verkeilen eines Rohres, insbesondere eines Torpedorohres, in einer rohrförmigen Halterung
Method for wedging a tube, particularly a missile launch tube, in a tubular support

(30) Priorité: 03.08.1998 FR 9809931
(43) Date de publication de la demande: 09.02.2000
(73) Titulaire: Constructions Industrielles de la Mediterranee C.N.I.M., 83507 La Seyne-sur-Mer Cedex (FR)
(72) Inventeur: Ponsot, Bernard, 83500 La Seyne sur Mer (FR); Seguin, Jean-Pierre, 83140 Six Fours (FR)
(74) Mandataire: Armengaud Ainé, Alain

(56) Documents cités:
- FR-A- 1 428 800
- US-A- 3 158 062
- US-A- 3 266 373
- US-A- 3 367 235
- US-A- 4 854 260
- US-A- 5 601 920
- DATABASE WPI Section PQ, Week 8743 Derwent Publications Ltd., London, GB; Class Q35, AN 87-305344 XP002100724 & SU 1 299 916 A (SHTELE V I), 30 mars 1987 (1987-03-30)

## Description

La présente invention concerne un procédé de calage d'un élément cylindrique tubulaire dans un logement métallique cylindrique, concentrique audit élément tubulaire ainsi qu'un procédé permettant d'extraire ledit élément tubulaire de son logement cylindrique dans lequel il est maintenu par ledit calage.

La présente invention se propose de réaliser le calage physique d'un élément cylindrique tubulaire en matériau composite carbone-époxy, obtenu par enroulement filamentaire de fibres de carbone, isolées entre elles, désigné ci-après fourreau, dans un logement concentrique audit fourreau et qui est constitué d'un tube métallique, notamment en acier, dénommé ci-après tube acier, extérieur audit fourreau, ce calage étant réalisé de façon à obtenir un élément dissociable.

SU-A-1 299 916 fait connaître un procédé de calage d'un élément cylindrique tubulaire, désigné ci-après fourreau, dans un logement cylindrique concentrique audit fourreau et qui est constitué d'un tube métallique, notamment en acier, dénommé ci-après tube acier, qui consiste à injecter, à l'état liquide, dans l'espace compris entre ledit fourreau composite et ledit tube acier, un matériau à changement de phase solide/liquide, réversible, activé par la température, constitué d'une paraffine, ledit matériau de calage en se refroidissant se solidifiant à la température ambiante maintenant ainsi ledit fourreau composite dans ledit tube acier, ledit fourreau pouvant être désolidarisé de son tube acier en chauffant ledit matériau à changement de phase.

La présente invention s'applique plus particulièrement aux tubes lance missiles mis en oeuvre dans les sous-marins lanceurs d'engins. On sait que dans de telles applications, le missile est logé dans un fourreau supportant les différents éléments de suspension dudit missile ainsi que les joints de chasse nécessaires à l'éjection pendant le lancement, ce fourreau étant logé dans un tube en acier qui a été préalablement intégré à la structure métallique du sous-marin. Dans cette application, le problème à résoudre réside dans le calage du fourreau en matériau composite dans le tube en acier, ce calage devant s'effectuer postérieurement à la mise en place du fourreau dans ledit tube. Ce calage est réalisé par un matériau dit à appui continu, de faible épaisseur (de l'ordre du centimètre) et il doit pouvoir être extrait de l'espace séparant les deux tubes afin de pouvoir désolidariser le fourreau du tube acier externe, ce qui complique encore le problème à résoudre.

Partant de l'état de la technique mentionné ci-dessus, la présente invention résout ce problème en apportant un procédé de calage et de désolidarisation d'un élément cylindrique tubulaire en matériau composite carbone-époxy, obtenu par enroulement filamentaire de fibres de carbone isolées entre elles, désigné ci-après fourreau, dans un logement cylindrique concentrique audit fourreau et qui est constitué d'un tube métallique, notamment en acier, dénommé ci-après tube acier, ce procédé s'appliquant plus particulièrement aux tubes lance missiles des sous-marins lanceurs d'engins, consistant à injecter, à l'état liquide, dans l'espace compris entre ledit fourreau composite et ledit tube acier, un matériau à changement de phase solide/liquide, réversible, activé par la température, constitué d'une paraffine, ledit matériau de calage en se refroidissant se solidifiant à la température ambiante maintenant ainsi ledit fourreau composite dans ledit tube acier, ledit fourreau pouvant être désolidarisé de son tube acier en chauffant ledit matériau à changement de phase,
étant caractérisé en ce que :
- ledit matériau à changement de phase est choisi dans la gamme des paraffines présentant une température de fusion située entre 45 et 60°C, dans laquelle sont dissous des granulés de polyéthylène et
- la désolidarisation du fourreau du tube acier est obtenue en faisant passer un courant électrique dans les fibres de carbone constituant la structure dudit fourreau amenant ainsi le matériau de calage à sa température de fusion, le passage dudit matériau à sa phase liquide permettant le démontage du fourreau et son extraction du tube acier.

Selon la présente invention, le procédé de réchauffage défini ci-dessus peut être mise en oeuvre pour faciliter l'injection du matériau de calage. A cet effet, avant l'injection dudit matériau de calage, on effectue un réchauffage du fourreau composite par passage d'un courant électrique dans les fibres de carbone constituant la structure dudit fourreau, en utilisant les propriétés de résistivité dudit fourreau, afin d'obtenir une meilleure répartition du matériau de calage entre ledit fourreau et le tube acier.

D'autres caractéristiques et avantages de la présente invention ressortiront de la description faite ci-après en référence aux dessins annexés, qui en illustrent des exemples de mise en oeuvre.

Sur les dessins :
- la figure 1 est une vue schématique en coupe axiale verticale d'un ensemble fourreau en matériau composite-tube acier lors de la mise en oeuvre du procédé d'injection du matériau de calage et,
- la figure 2 est une vue schématique similaire à la figure 1, représentant l'ensemble fourreau-tube acier lors de la mise en oeuvre du procédé assurant l'extraction du fourreau du tube dans lequel il est logé, par chauffage du matériau de calage.

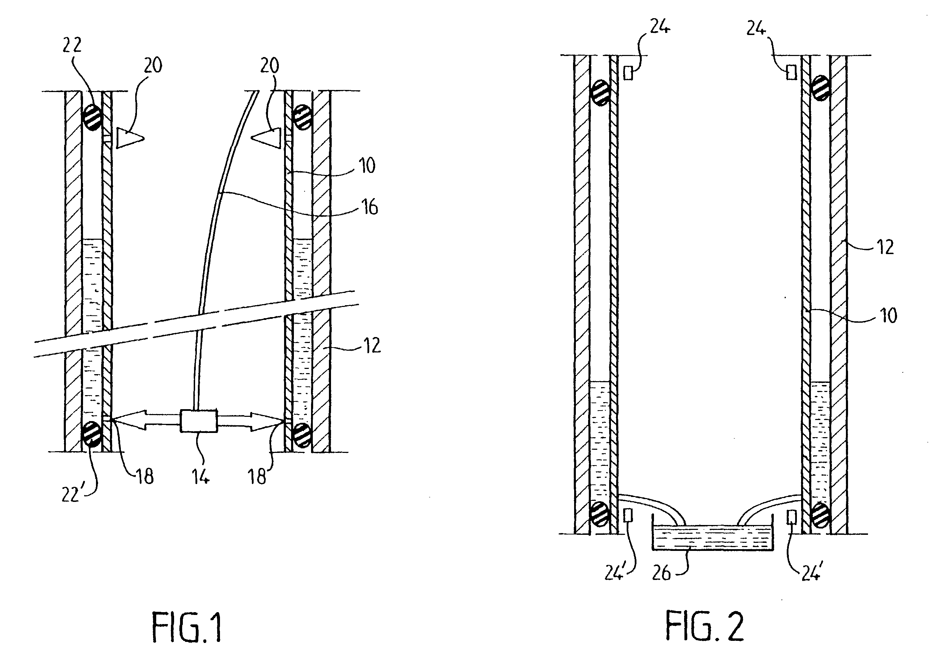

Sur la figure 1, on a représenté de façon schématique, le fourreau 10 en place dans son tube concentrique en acier 12 avec interposition de joints d'étanchéité tels que 22, 22', cet ensemble fourreau-tube acier 10 devant être rendu indissociable par mise en oeuvre d'un matériau de calage, effectuée postérieurement à la mise en place du fourreau 10, le tube acier 12 ayant été préalablement intégré à une structure métallique, par exemple la coque d'un sous-marin lorsque l'invention est appliquée à la réalisation de tubes lance-missiles intégrés dans des sous-marins lanceurs d'engins.

Comme on le comprend, la présente invention repose principalement sur le choix de ce matériau de calage qui est injecté, à l'état liquide, entre le fourreau 10 en matériau composite carbone-epoxy et son logement cylindrique concentrique ou tube acier 12. Comme on l'a précisé ci-dessus, ce matériau, à appui continu présente une faible épaisseur de l'ordre du centimètre. Il doit remplir les fonctions ci-après :
- Constituer un appui simple entre le fourreau 10 et le tube acier 12 sans qu'il soit nécessaire de prévoir une adhérence entre ce matériau d'une part et le fourreau et le tube acier d'autre part,
- Résister aux différents cas de charge transmis par le tube acier 12 (notamment vibrations, déformations imposées du type flèche et ovalisation statique et dynamique).

Ce matériau doit répondre en outre aux contraintes ci-après :
- une température de fusion située dans une gamme de 30 à 100 degrés Celsius ;
- une faible viscosité à l'état liquide afin de permettre son injection entre le fourreau et le tube acier et son extraction à la pression atmosphérique et,
- une faible densité.

Compte-tenu de ces exigences, la présente titulaire a découvert que parmi les différentes familles de matériaux à changements de phase réversible (solide-liquide) pouvant être envisagés, les huiles minérales, du type paraffine présentaient le meilleur compromis. En outre, dans la gamme des parafffines envisagées, la titulaire a identifié plusieurs nuances qui, pour l'application visée, se différencient principalement par la température de fusion : cette température se situant entre 45 et 60°C environ. Par ailleurs, la présente titulaire a découvert que les propriétés mécaniques de ces nuances de paraffine et en particulier leur tenue au fluage (c'est-à-dire leur capacité à s'écouler dans l'espace compris entre le fourreau 10 et le tube acier 12 en cas de sollicitations statiques imposées) pouvaient cependant être améliorées. Dans ce but, l'une des propriétés caractéristiques de la paraffine a été utilisée : il s'agit de sa capacité à dissoudre certains polymères et plus particulièrement les polymères thermoplastiques de type polyéthylène. Ces polymères présentent des propriétés mécaniques élevées mais nécessitent pour être mis en oeuvre, des conditions de températures et de pression qui sont incompatibles avec l'application visée. Toutefois, la titulaire a découvert qu'il était possible de mettre en oeuvre ces polymères par dissolution de granulés de polyéthylène dans la paraffine en fusion, ce qui permet d'obtenir un mélange injectable, c'est-à-dire présentant une faible viscosité et une faible température de fusion, ce qui résout le problème posé.

Après refroidissement, le mélange paraffine-polyéthylène durcit et présente les caractéristiques mécaniques assurant le calage. Pour effectuer l'extraction du fourreau composite 10 du tube acier 12, il suffit de réchauffer, comme on le décrira ci-après, le matériau, qui repasse ainsi à l'état liquide, avec une faible viscosité permettant son évacuation par écoulement par simple gravité

Ainsi, l'invention apporte un matériau de calage qui associe les deux propriétés suivantes (réglables par une simple loi des mélanges) :
- Propriétés mécaniques conférées par le polyéthylène.
- Bas point de fusion et faible viscosité donnés par la paraffine.

Les essais auxquels s'est livrée la présente titulaire a confirmé la capacité du matériau de calage objet de l'invention à résoudre le problème posé.

La figure 1 du dessin annexé illustre de façon très schématique un mode de mise en oeuvre du procédé d'injection du matériau de calage entre le fourreau 10 en matériau composite et le tube extérieur concentrique 12. L'injection du matériau de calage, présentant la composition mentionnée ci-dessus s'effectue, dans cet exemple de mise en oeuvre par coulée en source à la pression atmosphérique, à partir du bas du tube 10 vers le haut de ce tube.

Dans ce but, on prévoit un réservoir placé à l'extérieur et en partie supérieure, au dessus des tubes 10 et 12 contenant le mélange paraffine-polyéthylène, munis de moyens de chauffage et alimentant une tête de répartition 14 par l'intermédiaire de tuyaux d'alimentation 16. La tête de répartition 14, réalisée de manière connue est située à l'intérieur du fourreau 10 et elle est reliée à différents points d'injection 18 prévus à la partie inférieure du fourreau 10. On prévoit en outre, en partie supérieure du fourreau 10, des trous d'évents tels que 20 afin d'assurer, lors de l'injection du matériau de calage, l'évacuation de l'air contenu dans l'espace interposé entre le tube 12 et le fourreau 10.

La figure 2 illustre de façon également très schématique un mode de mise en oeuvre du procédé selon l'invention permettant de désolidariser les tubes 10 et 12 afin d'assurer l'extraction du fourreau composite 10.

Cette dessolidarisation s'effectue selon l'invention par remise à l'état liquide du matériau de calage. Ce changement de phase de ce matériau nécessite son chauffage. Diverses solutions ont été envisagées dans ce but.

La première consiste à chauffer le tube acier 12. Cependant, ce tube, soudé à une structure métallique complexe de grande dimension et de masse importante interdit l'apport d'énergie calorifique nécessaire à la montée en température du tube (difficulté de mise en place des sources chauffantes, puissances à mettre en oeuvre très importantes, environnement contraignant).

La seconde solution envisageable réside dans le chauffage du produit de calage. Cette solution a été également écartée étant donné que le produit de calage, après injection, n'est pas ou peu accessible et il est donc impensable de réaliser une fusion à coeur de ce produit sauf à utiliser des éléments chauffants intégrés en son sein ou à l'interface acier, ce qui pose des problèmes difficilement surmontables.

Une autre solution pourrait consister en un chauffage du fourreau composite 10 à l'aide d'éléments chauffants. Cependant, cette solution a été écartée pour les motifs suivants : d'une part, la partie interne du fourreau ne laisse pas une surface suffisante pour obtenir l'échange calorifique souhaité et, d'autre part, sa partie externe qui possède une surface suffisante pour l'échange calorifique souhaité est inaccessible après l'injection du produit de calage. Par ailleurs, la pose d'éléments chauffants sur cette partie externe entraîne des problèmes techniques pratiquement insurmontables en raison de l'inaccessibilité pour réparation ou entretien de tels éléments.

Ayant écarté les solutions mentionnées ci-dessus, la présente titulaire a découvert que la seule solution possible était de mettre en oeuvre une transmission de chaleur par effet Joule en utilisant les propriétés de résistivité des fibres de carbone constituant la structure du fourreau 10 en matériau composite. En effet, l'analyse de la structure constituant ce fourreau a conduit aux constatations suivantes :
- le carbone est relativement bon conducteur de l'électricité ;
- les fibres le constituant se présentent comme des nappes de conducteurs : ces fibres sont isolées entre elles par les couches de résines epoxy ;
- le pouvoir calorifique du carbone est suffisamment bon pour obtenir la fusion du produit de calage et,
- la faible résistivité des fibres de carbone (0,012 Ω. cm².cm) impose un fort courant d'alimentation (quelques K.A) mais une faible tension aux extrémités du tube 10 (quelques Volts), ce qui est favorable aux contraintes de sécurité d'exploitation.

Pour ces motifs, l'invention utilise la conductivité de la matière (carbone epoxy) constituant le fourreau composite 10 afin d'obtenir la fusion du matériau de calage et la desolidarisation du fourreau 10 du tube acier 12, ce fourreau constituant ainsi une résistance chauffante.

La figure 2 représente de façon très schématique un exemple de réalisation des moyens pouvant être mis en oeuvre selon l'invention pour assurer l'extraction du fourreau 10. Dans cet exemple de réalisation, le chauffage du fourreau 10 est réalisé à l'aide d'électrodes annulaires intégrées 24, 24' positionnées respectivement à la partie supérieure et à la partie inférieure du fourreau composite 10, ces électrodes étant mises sous tension à l'aide d'un générateur (non représenté), fournissant par exemple une puissance de l'ordre de 70 à 80 kW sous une tension de l'ordre de 50 Volts. On dispose à la partie inférieure du fourreau composite 10, une bâche 26 dans laquelle est recueillie la paraffine fondue s'écoulant au-travers des trous 18 ayant servis à son injection.

Les essais de résistivité auxquels s'est livrée la titulaire ont permis de déterminer que le sens d'alimentation des fibres en courant le plus approprié pour répondre aux critères définis précédemment, était le sens longitudinal, ce qui implique pour la réalisation du fourreau composite 10
- la réalisation des contacts de connexion au fourreau en bout de fibres ;
- la réalisation de connexions de distribution électrique de faible résistance et,
- l'utilisation d'un générateur continu de faible tension et de forte intensité.

Les essais ont montré que la désolidarisation des deux tubes 10 et 12 était possible au bout d'environ 6 à 7 heures. A l'expiration de ce délai, il a été possible de récupérer 98% de la paraffine, la température de fusion de cette dernière étant de 60°C.

Selon la présente invention, on peut envisager d'autres applications du chauffage intégré du fourreau 10 en matériau composite, par exemple :
- le préchauffage du fourreau 10 lors de l'injection du produit de calage, ce qui permet d'obtenir une meilleure répartition de ce dernier et,
- le maintien en température des différents composants ou appareillages dont le fourreau 10 peut être pourvu, en utilisant de faibles puissances d'alimentation (de l'ordre de quelques kW pour une température de 20°C environ).

## Revendications

1. Procédé de calage et de désolidarisation d'un élément cylindrique tubulaire en matériau composite carbone-époxy, obtenu par enroulement filamentaire de fibres de carbone isolées entre elles, désigné ci-après fourreau, dans un logement cylindrique concentrique audit fourreau et qui est constitué d'un tube métallique, notamment en acier, dénommé ci-après tube acier, ce procédé s'appliquant plus particulièrement aux tubes lance missiles des sous-marins lanceurs d'engins, consistant à injecter, à l'état liquide, dans l'espace compris entre ledit fourreau composite (10) et ledit tube acier (12), un matériau à changement de phase solide/liquide, réversible, activé par la température, constitué d'une paraffine, ledit matériau de calage en se refroidissant se solidifiant à la température ambiante maintenant ainsi ledit fourreau composite (10) dans ledit tube acier (12), ledit fourreau (10) pouvant être désolidarisé de son tube acier (12) en chauffant ledit matériau à changement de phase,
étant **caractérisé en ce que** :
- ledit matériau à changement de phase est choisi dans la gamme des paraffines présentant une température de fusion située entre 45 et 60°C, dans laquelle sont dissous des granulés de polyéthylène et
- la désolidarisation du fourreau (10) du tube acier (12) est obtenue en faisant passer un courant électrique dans les fibres de carbone constituant la structure dudit fourreau (10) amenant ainsi le matériau de calage à sa température de fusion, le passage dudit matériau à sa phase liquide permettant le démontage du fourreau et son extraction du tube acier.

2. Procédé selon la revendication 1 **caractérisé en, ce que**, avant l'injection dudit matériau de calage, on effectue un réchauffage du fourreau composite (10) par passage d'un courant électrique dans les fibres de carbone constituant la structure dudit fourreau, en utilisant les propriétés de résistivité dudit fourreau, afin d'obtenir une meilleure répartition du matériau de calage entre ledit fourreau (10) et le tube acier (12).

3. Procédé selon l'une des revendications 1 ou 2 **caractérisé en ce que** le sens d'alimentation en courant des fibres du fourreau composite (10) est le sens longitudinal.

4. Procédé selon l'une quelconque des revendications 1 à 3 **caractérisé en ce que** le chauffage est obtenu à l'aide d'un générateur en courant continu fournissant une puissance de l'ordre de 70 à 80 kW sous une tension de l'ordre de 50 Volts.

5. Procédé selon l'une quelconque des revendications 1 à 4 **caractérisé en ce que** le fourreau (10) est pourvu d'électrodes annulaires intégrées (24, 24') disposées respectivement en parties supérieure et inférieure dudit fourreau, ces électrodes étant connectées au générateur d'alimentation.

## Patentansprüche

1. Verfahren zum Verkeilen und zum Herauslösen eines rohrförmigen zylindrischen Elementes aus Kohlenstoff-Epoxy-Kompositmaterial, hiernach Hülse genannt, das durch filamentweises Einwickeln von unter sich isolierten Kohlenstofffasern hergestellt ist, in einem zylindrischen, konzentrisch zu besagter Hülse angeordneten Gehäuse, das durch ein Metallrohr, insbesondere aus Stahl, gebildet ist, hiernach Stahlrohr genannt, wobei dieses Verfahren besonders bei Fernlenkkörper-Startrohren von als Raketenbasis dienenden Unterseebooten angewendet wird und darin besteht, dass in den Raum zwischen der besagten Komposit-Hülse (10) und dem Stahlrohr (12) ein Material mit reversiblem, von der Temperatur aktivierbarem Phasenwechsel zwischen fest und flüssig, gebildet durch ein Paraffin, in flüssigem Zustand eingefüllt wird, wobei das besagte Verkeilungs-Material sich beim Abkühlen auf die Umgebungstemperatur verfestigt und so die Komposit-Hülse (10) in dem Stahlrohr (12) festhält, und wobei die Hülse (10) von ihrem Stahlrohr (12) lösbar ist, indem besagtes Phasenwechselmaterial erwärmt wird,
**dadurch gekennzeichnet, dass** :
- besagtes Phasenwechselmaterial ausgewählt ist aus dem Bereich der Paraffine mit einer zwischen 45 und 60 °C liegenden Schmelztemperatur, in welchem Polyethylen-Granulate aufgelöst sind, und
- das Herauslösen der Hülse (10) aus dem Stahlrohr (12) herbeigeführt wird, indem man einen elektrischen Strom in den Kohlenstofffasern fließen lässt, welche die Struktur der besagten Hülse (10) bilden, wobei das Verkeilungsmaterial auf seine Schinelztemperatur gebracht wird und der Übergang des besagten Materials in seine flüssige Phase die Demontage und das Herausziehen der Hülse aus dem Stahlrohr ermöglicht.

2. Verfahren nach Anspruch 1, **dadurch gekennzeichnet, dass** vor dem Einfüllen des besagten Verkeilungsmaterials eine Erhitzung der Komposit-Hülse (10) durch Durchleiten eines elektrischen Stroms durch die Kohlenstofffasern bewirkt wird, die die Struktur der Hülse bilden, wobei die Widerstandseigenschaften der besagten Hülse genutzt werden, um eine bessere Verteilung des Verkeilungsmaterials zwischen besagter Hülse (10) und dem Stahlrohr (12) zu erreichen.

3. Verfahren nach Anspruch 1 oder 2, **dadurch gekennzeichnet, dass** die Richtung der Stromeinspeisung in die Fasern der Komposit-Hülse (10) deren Längsrichtung ist.

4. Verfahren nach einem der Ansprüche 1 bis 3, **dadurch gekennzeichnet, dass** die Aufheizung mithilfe eines Gleichstrom-Generators erzielt wird, der eine Leistung in der Größenordnung von 70 bis 80 kW bei einer Spannung der Größenordnung von 50 Volt liefert.

5. Verfahren nach einem der Ansprüche 1 bis 4, **dadurch gekennzeichnet, dass** die Hülse (10) mit integrierten ringförmigen Elektroden (24, 24') versehen ist, die jeweils im oberen und unteren Teil der besagten Hülse angeordnet sind, wobei diese Elektroden an den Speisegenerator angeschlossen werden.

## Claims

1. Method for wedging and separating a tubular cylindrical element mads of a carbon/epoxy composite material, obtained by filament winding of mutually insulated carbon fibres, hereinafter called a sheath, in a cylindrical housing which is concentric to said sheath and which consists of a metal tube, in particular made of steel, hereinafter called steel tube, this method more particularly applying to missile launch tubes of submarine missile launchers, consisting of injecting, in the liquid state, a reversible, solid/liquid transition phase material activated by the temperature and consisting of a paraffin into the space between said composite sheath (10) and said steel tube (12), said wedging material solidifying at ambient temperature on cooling and thus keeping said composite sheath (10) in said steel tube (12), said sheath (10) being separable from its steel tube (12) by heating said phase transition material, **characterised in that**:
- said phase transition material is selected from the range of paraffins having a melting temperature between 45 and 60°C, in which polyethylene granules are dissolved and
- the separation of the sheath (10) from the steel tube (12) is obtained by passing an electric current into the carbon fibres constituting the structure of said sheath (10), thus bringing the wedging material to its melting temperature, the passage of said material to its liquid phase allowing the sheath to be disassembled and extracted from the steel tube.

2. Method according to claim 1, **characterised in that**, prior to injection of said wedging material, the composite sheath (10) is heated by passing an electric current into the carbon fibres constituting the structure of said sheath, by using the specific resistance of said sheath to obtain improved distribution of the wedging material between said sheath (10) and the steel tube (12).

3. Method according to either of claims 1 or 2, **characterised in that** the direction of the current supply for the composite sheath fibres (10) is the longitudinal direction.

4. Method according to any one of claims 1 to 3, **characterised in that** heating is carried out by a continuous current generator providing power of about 70 to 80 kW at a voltage of about 50 volts.

5. Method according to any one of claims 1 to 4, **characterised in that** the sheath (10) is provided with integrated annular electrodes (24, 24') respectively disposed in the upper and lower parts of said sheath, these electrodes being connected to the power generator.
